# EUROPÄISCHE PATENTANMELDUNG

(11) **EP 4 520 949 A1**
(43) Veröffentlichungstag der Anmeldung: **12.03.2025**
(21) Anmeldenummer: 24187655.6
(22) Anmeldetag: 10.07.2024
(51) Int. Cl.: F02K 9/52, F02K 9/60

(54) **NACHRÜSTBARES BRENNKAMMER-LEITBLECH FÜR EINEN EINSPRITZKOPF EINES RAKETENTRIEBWERKS**

(30) Priorität: 06.09.2023 DE 102023123964
(71) Anmelder: ArianeGroup GmbH, 82024 Taufkirchen (DE)
(72) Erfinder: Maeding, Chris Udo, 85716 Unterschleißheim (DE)
(74) Vertreter: Schornack, Oliver

(57) **Zusammenfassung**

Es ist ein Nachrüstbauteil (20) zum Herstellen eines Leitblechs (4) an einem Einspritzkopf (1) eines Raketentriebwerks offenbart. Das Nachrüstbauteil umfasst eine Verlängerungshülse (3), die dazu eingerichtet ist, in ein Einspritzelement (2) des Einspritzkopfes (1) eingeführt zu werden, und mindestens ein Plattensegment (6), das außenseitig an der Verlängerungshülse (3) angebracht ist. Die Verlängerungshülse (3) weist an einem dem Plattensegment (6) abgewandten Ende einen Befestigungsabschnitt (11) auf. Ferner ist ein Nachrüstverfahren zum Einbau eines solchen Nachrüstbauteils in ein Einspritzelement offenbart.

## Beschreibung

Die vorliegende Offenbarung betrifft ein Nachrüstbauteil zum Herstellen eines Leitblechs an einem Einspritzkopf eines Raketentriebwerks sowie ein Verfahren zum Nachrüsten eines Einspritzkopfes mit solch einem Leitblech. Insbesondere betrifft die vorliegende Offenbarung ein Nachrüstbauteil aus einer Verlängerungshülse und einem Plattensegment, wobei die Verlängerungshülse in ein Einspritzelement des Einspritzkopfes eingeführt und dort befestigt werden kann.

Eine übliche Brennkammer eines Raketentriebwerks weist meist einen zylindrischen Grundkörper auf, in dem eingespritzter Treibstoff (und optional Oxydator) verdampft, durchmischt wird und in einer chemischen Reaktion verbrennt. Insbesondere bei der Verwendung von Kohlenwasserstoff als Brennstoff werden zum Teil hochfrequente Schwingungen in dem Brennkammerraum erzeugt. Diese Schwingungen (Schwingungsphänomene) werden üblicherweise unterdrückt oder gedämpft, indem akustische Absorber und/oder Leitbleche (auch als "Baffle" bezeichnet) in dem zylindrischen Brennkammerkörper angeordnet werden. Diese Maßnahmen sollen ein Ausbreiten der Wellen (Schwingungen) verhindern oder zumindest reduzieren.

Jedoch wird der Aufbau des Brennkammerkörpers und insbesondere des Einspritzkopfes durch die Integration von Leitblech(en) und Absorber recht komplex. Beispielsweise muss der Aufbau des Einspritzkopfes mit seiner Vielzahl von Einspritzelementen neu entworfen werden. Insgesamt werden somit die Herstellungsdauer und damit auch die Herstellungskosten in die Höhe getrieben.

Vor diesem Hintergrund liegt der vorliegenden Erfindung die Aufgabe zugrunde, eine Anordnung von Leitblechen im Brennkammerraum einfach und kostengünstig zu ermöglichen.

Diese Aufgabe wird durch ein Nachrüstbauteil mit den Merkmalen des Anspruchs 1 sowie einem Verfahren zum Nachrüsten eines Einspritzkopfes mit den Merkmalen des Anspruchs 4 gelöst.

Gemäß einem ersten Aspekt zum besseren Verständnis der vorliegenden Offenbarung umfasst ein Nachrüstbauteil zum Herstellen eines Leitblechs an einem Einspritzkopf eines Raketentriebwerks eine Verlängerungshülse, die dazu eingerichtet ist, in ein Einspritzelement des Einspritzkopfes eingeführt zu werden, und mindestens ein Plattensegment, das außenseitig an der Verlängerungshülse angebracht ist. Dies ermöglicht ein Nachrüsten eines Bauteils, welches die Funktion von Leitblechen übernimmt. Insbesondere das Plattensegment des Nachrüstbauteils fungiert als Leitblech bzw. Baffle. Aufgrund des nachträglichen Einbaus des Plattensegments kann der Einspritzkopf unabhängig von dem Leitblech entworfen und gebaut werden.

Ferner ist es möglich, einen bestehenden Einspritzkopf nachzurüsten, indem mindestens ein Nachrüstbauteil mit seiner Verlängerungshülse in eines von bereits vorhandenen Einspritzelementen eingeführt wird. Daher ist der Begriff "Nachrüstbauteil" dahingehend zu verstehen, dass die Funktion eines Leitblechs nach dem Herstellen des Einspritzkopf erfolgen kann. Das Leitblech wird somit nachgerüstet. Dabei kann das Nachrüsten beim Herstellen der Brennkammer erfolgen oder auch erst später (nachgerüstet werden), wenn die Brennkammer bereits erstellt war.

Zudem weist die Verlängerungshülse an einem dem Plattensegment abgewandten Ende einen Befestigungsabschnitt auf. Der Befestigungsabschnitt dient in erster Linie einer festen Verbindung zwischen Verlängerungshülse und Einspritzelement. Damit lässt sich die Verlängerungshülse, und somit das Nachrüstbauteil, im Inneren des Einspritzelements befestigen. Dies ermöglicht einen schnellen Einbau des Nachrüstbauteils, wodurch Herstellungsdauer und damit einhergehende Herstellkosten reduziert werden.

Ferner kann aufgrund der Verlängerungshülse der Durchgang für den Treibstoff oder Oxydator weiterhin gewährleistet werden. Aufgrund des Durchleitens des Treibstoffs oder Oxydators durch die Verlängerungshülse wird einerseits eine Kühlung der Verlängerungshülse und somit auch (zumindest eines Teils) des mindestens einen Plattensegments erreicht. Andererseits ist es auch möglich, den Treibstoff oder Oxydator weiter im Inneren des Brennkammerraums ausströmen zu lassen, also beabstandet von der Einspritzfrontplatte. Dadurch kann eine Vermischung von Treibstoff und Oxydator verbessert werden, da nicht beide Komponenten auf Höhe der Frontplatte in den Brennkammerraum strömen.

Lediglich beispielhaft kann das Einspritzelement in Form eines Koaxialelements vorliegen, welches einen innenliegenden runden Durchgang aufweist, der letztendlich in den Brennkammerraum mündet, und durch den Treibstoff oder Oxydator geleitet werden kann. Selbstverständlich kann das Einspritzelement auch einen Durchgang mit eckigem Querschnitt aufweisen, und die Verlängerungshülse einen entsprechenden Querschnitt aufweisen.

Insbesondere ist die Verlängerungshülse derart gestaltet, dass ihre Außenseite(n) an der/den Innenseite(n) des Einspritzelement bündig anliegt/anliegen.

In einer Implementierungsvariante kann der Befestigungsabschnitt eine Bördelkante oder ein Gewinde umfassen. Beides dient der Befestigung bzw. Verbindung zwischen Einspritzelement und Verlängerungshülse, sodass das Nachrüstbauteil mindestens in Längsrichtung der Verlängerungshülse fest im Einspritzkopf gehalten ist.

In einer weiteren Implementierungsvariante kann das mindestens eine Plattensegment an einer in Richtung Befestigungsabschnitt zeigenden Kante eine Kontur aufweisen, die an eine außenseitige Kontur des Einspritzelements und einen daran angrenzenden Abschnitt des Einspritzkopfes angepasst ist.

Lediglich beispielhaft kann das Einspritzelement an dem Einspritzkopf derart befestigt sein, dass ein Befestigungsmittel des Einspritzelements in den Brennkammerraum ragt. Mit anderen Worten ragt ein Teil des Einspritzelements und/oder eines zugehörigen Befestigungsmittels über die Innenseite einer Einspritzfrontplatte in den Brennkammerraum. Umgekehrt kann in der Einspritzfrontplatte auch eine Vertiefung an der Stelle sein, an der das Einspritzelement brennkammerraumseitig endet. Das Plattensegment kann nun eine zu der Einspritzfrontplatte weisende Kante oder Seite aufweisen, die sowohl an den hervorragenden Teil des Einspritzelements bzw. Befestigungsmittels als auch an den vertieften Teil der Einspritzfrontplatte angepasst ist (beispielsweise anliegt). Die Kontur der Kante oder Seite des Plattensegments verläuft somit entlang einer Seite sämtlicher Elemente des Einspritzkopfes, die dem Brennkammerraum zugewandt sind.

In einer weiteren Implementierungsvariante kann das mindestens eine Plattensegment so dimensioniert sein, dass eine zu der Einspritzfrontplatte zeigenden Kante des Plattensegment die Einspritzfrontplatte nicht berührt. Mit anderen Worten wird eine direkte Anbindung des mindestens einen Plattensegments an die Frontplatte vermieden und das Nachrüstbauteil wird ausschließlich über die Verlängerungshülse an dem Einspritzelement befestigt. Dadurch wird ein Wärmeeintrag in die Frontplatte durch das mindestens eine Plattensegment vermieden oder zumindest verringert.

Lediglich als Beispiel kann das Nachrüstbauteil aus einer Kupferlegierung hergestellt werden. Alternativ kann das Nachrüstbauteil aus einer Stahllegierung gefertigt werden, die einen höheren Schmelzpunkt aufweist als die Kupferlegierung.

Gemäß einem zweiten Aspekt zum besseren Verständnis der vorliegenden Offenbarung umfasst ein Verfahren zum Nachrüsten eines Einspritzkopfes eines Raketentriebwerks mit Leitblechen ein Bereitstellen mindestens eines Nachrüstbauteil gemäß dem ersten Aspekt oder eines seiner Beispiele und/oder Implementierungsvarianten. Da das Nachrüstbauteil ein Plattensegment mit Leitblechfunktionalität aufweist, kann bereits ein einzelnes Nachrüstbauteil ausreichen, um Schwingungen oder Wellen in dem Brennkammerraum zu reduzieren oder zu verhindern.

Das Verfahren umfasst ferner ein Einführen der Verlängerungshülse des Nachrüstbauteils in ein Einspritzelement des Einspritzkopfes, und ein Befestigen eines Befestigungsabschnitts der Verlängerungshülse an dem Einspritzelement. Mit anderen Worten wird die Verlängerungshülse innenseitig in dem Einspritzelement befestigt.

Dieses Verfahren ermöglicht einen schnellen Einbau und/oder Nachrüsten eines Bauteils mit Plattensegment, d. h. mit Leitblechfunktionalität, in einem Brennkammerraum. Dieses Verfahren kann unabhängig von dem Design und Aufbau des Einspritzkopfes ausgeführt werden, insbesondere unabhängig von der Anordnung der Einspritzelemente.

Lediglich beispielhaft kann das Plattensegment so an der Verlängerungshülse angebracht sein, dass es in einer Ebene angeordnet ist, die eine Längsachse der Verlängerungshülse enthält. Ferner kann das Plattensegment senkrecht zu der Einspritzfrontplatte angeordnet sein. Selbstverständlich kann auch eine schräge Anordnung des Plattensegments in Bezug auf die Längsachse der Verlängerungshülse und/oder in Bezug auf die Einspritzfrontplatte umgesetzt werden. Dadurch kann Einfluss auf die Schwingungsausbreitung bzw. Wellenausbreitung der Gase in dem Brennkammerraum genommen werden. Ferner können durch die schräge Anordnung gezielt Strömungen und/oder Verwirbelungen der Gase in dem Brennkammerraum erzeugt werden.

In einer Implementierungsvariante kann das Befestigen ein Einführen eines Dorns in die Verlängerungshülse von einem einer Bördelkante der Verlängerungshülse abgewandten Ende, und ein Aufweiten der Bördelkante zur Fixierung des Nachrüstbauteils in dem Einspritzelement umfassen. Die Bördelkante stellt einen beispielhaften Befestigungsabschnitt des Nachrüstbauteils (insbesondere der Verlängerungshülse) dar, wobei der Befestigungsabschnitt an einem dem Plattensegment abgewandten Ende der Verlängerungshülse angeordnet ist. Durch das Aufweiten der Bördelkante wird die Verlängerungshülse des Nachrüstbauteils an einer Innenseite des Einspritzelements befestigt, insbesondere kraftschlüssig darin gehalten.

In einer weiteren Implementierungsvariante kann das Verfahren ferner ein Einarbeiten einer Nut auf einer Innenseite des Einspritzelements umfassen, wobei die Nut dazu eingerichtet ist, die aufgeweitete Bördelkante aufzunehmen. Mit anderen Worten wird in dem Einspritzelement ein Abschnitt (die Nut) geschaffen, der einen Formschluss zwischen Bördelkante und Innenseite des Einspritzelements ermöglicht. Dies erhöht die Rückhaltekraft der Bördelkante und verbessert somit die Befestigung des Nachrüstbauteils in dem Einspritzelement.

Ferner kann der Übergang zwischen dem Innenraum oder Kanal des Einspritzelements in den Innenraum oder Kanal der Verlängerungshülse im wesentlichen ohne nach innen weisende Kante erfolgen. Dadurch kann eine Strömung des Treibstoffs oder Oxydator durch das Einspritzelement unverändert aufrechterhalten werden lediglich beispielhaft kann der Treibstoff oder Oxydator spiralförmig durch den Innenraum oder Kanal des Einspritzelements in Richtung Brennkammerraum strömen, wobei diese spiralförmige Strömung auch im Inneren der Verlängerungshülse aufrechterhalten bleibt.

In einer weiteren Implementierungsvariante kann die Nut innenseitig und in Umfangsrichtung eines Posts des Einspritzelement verlaufen. Der Post des Einspritzelements ist ein Teil eines Einspritzelements, insbesondere eines Koaxial-Einspritzelements. Üblicherweise ist dieser Post dazu eingerichtet, einen in Axialrichtung des Einspritzelements verlaufenden innenliegenden Kanal zu bilden, durch den Treibstoff oder Oxydator strömen kann. An einem brennraumseitigen Ende öffnet sich der Kanal, beispielsweise bei oder in der Einspritzfrontplatte, in den Brennraum. Die Verlängerungshülse des Nachrüstbauteils verlängert diesen Kanal, wodurch gleichzeitig das Nachrüstbauteil durch den durchströmenden Treibstoff oder Oxydator gekühlt wird.

In einer anderen Implementierungsvariante kann das Befestigen ein Festschrauben der Verlängerungshülse an dem Einspritzelement umfassen. Dafür kann an der Verlängerungshülse und dem Einspritzelement jeweils ein korrespondierendes Gewinde vorgesehen sein, sodass die Verlängerungshülse in das Einspritzelement eingeschraubt werden kann. Lediglich beispielhaft kann das Einspritzelement ein Innengewinde aufweisen und die Verlängerungshülse ein korrespondierendes Außengewinde.

In einer weiteren Implementierungsvariante kann das Verfahren ferner ein Einarbeiten eines Gewindes am Einspritzelement umfassen. Lediglich beispielhaft kann das Gewinde innenseitig an einem Post des Einspritzelements angeordnet sein. Somit kann das Gewinde auch nachträglich vorgesehen werden, um das Nachrüstbauteil später bzw. an bereits hergestellten Einspritzköpfen anbringen zu können.

In noch einer anderen Implementierungsvariante kann das Verfahren ferner ein Verbinden des mindestens einen Plattensegments mit einer Verlängerungshülse oder einem Plattensegment eines weiteren Nachrüstbauteils, das in ein benachbartes Einspritzelement eingebracht ist, umfassen. Das benachbarte Einspritzelement weist somit ebenfalls ein Nachrüstbauteil auf, dass entsprechend den ersten Verfahrensschritten darin eingebaut ist. Durch das Verbinden des mindestens einen Plattensegments mit einer weiteren Verlängerungshülse oder einem weiteren Plattensegment kann der Raum zwischen den zwei Verlängerungshülse (des ersten Nachrüstbauteils und des weiteren Nachrüstbauteils), der ferner durch die Einspritzfrontplatte begrenzt wird, von dem/den Plattensegment(en) belegt werden. Dadurch lässt sich ein effizientes Leitblech herstellen, welches zudem beidseitig durch die beiden Verlängerungshülsen gehalten wird, wodurch die Stabilität erhöht ist. Ferner wird dadurch der Raum direkt oberhalb der Einspritzfrontplatte durch das Leitblech unterteilt.

Lediglich beispielhaft kann das Verbinden durch Schweißen erfolgen. Selbstverständlich können auch andere Verbindungstechniken, wie zum Beispiel kleben o. ä., eingesetzt werden.

Ferner kann die Größe des mindestens einen Plattensegment an die Anordnung der Einspritzelemente in dem Einspritzkopf angepasst werden. Somit kann ein Nachrüstbauteil ein Plattensegment mit einer unterschiedlichen Größe zu einem Plattensegment eines weiteren Nachrüstbauteils aufweisen. Insbesondere kann die Länge eines Plattensegments (senkrecht zur Längsrichtung der Verlängerungshülse betrachtet) abhängig von dem Abstand zweier benachbarter Einspritzelemente gewählt werden.

In noch einer Implementierungsvariante kann das Einführen (der Verlängerungshülse) und das Verbinden ein Herstellen eines radial angeordneten Leitblechs und/oder eines ringförmigen Leitblechs umfassen. Mit anderen Worten werden eine Mehrzahl von Nachrüstbauteilen in einer entsprechenden Anzahl von Einspritzelementen angeordnet und eingebaut, sodass eine (durchgehende) Kette von Plattensegmenten entsteht. Diese Kette von Plattensegmenten, die jeweils an einer zugehörigen Verlängerungshülse integriert oder befestigt sind und mit einer weiteren Verlängerungshülse oder einem weiteren Plattensegment verbunden werden, bilden somit ein durchgehendes Leitblech oder Baffle.

Je nach Auswahl der durch Nachrüstbauteile versehenen Einspritzelemente, kann das so gebildete durchgehende Leitblech oder Baffle in jeder beliebigen Anordnung auf der Einspritzfrontplatte vorgesehen werden. Lediglich beispielhaft sind ein radial angeordnetes Leitblech sowie ein ringförmiges Leitblech erwähnt. Das radial angeordnete Leitblech kann beispielsweise bis zu einer Außenkante oder Außenseite der Einspritzfrontplatte in Radialrichtung geführt werden, mit anderen Worten bis an die zylindrische Innenwand des Brennkammerraums. Das ringförmige Leitblech kann beispielsweise durchgehend beabstandet von der Innenwand des Brennkammerraums auf der Einspritzfrontplatte angeordnet werden. Zum Beispiel kann das ringförmige Leitblech konzentrisch zu der zylindrischen Innenwand des Brennkammerraums auf der Einspritzfrontplatte angeordnet sein. Ein Durchmesser des ringförmigen Leitblechs ist dabei von der Anordnung der Einspritzelemente, die über die jeweiligen Plattensegmente quasi miteinander verbunden werden, abhängig.

Die Plattensegmente können dabei gekrümmt sein, um das ringförmige Leitblech zu bilden. Selbstverständlich können die Plattensegmente auch eben sein, wodurch das Leitblech ein Polygon bildet.

In einer weiteren Implementierungsvariante kann das Verfahren ferner ein Einarbeiten mindestens einer Öffnung in einem Abschnitt des Einspritzkopfes, der sich neben dem Plattensegment des eingebauten Nachrüstbauteils befindet, umfassen. Die Öffnung in dem Abschnitt des Einspritzkopfes ist dabei so vorgesehen, dass sie mit einem Abschnitt des Einspritzkopfes fluidisch verbunden wird, der Treibstoff oder Oxydator führt. Mit anderen Worten soll die Öffnung in den Brennkammerraum führen und dabei zulassen, dass Treibstoff oder Oxydator durch die Öffnung hindurchströmt. Aufgrund der Anordnung der Öffnung neben dem Plattensegment wird das Plattensegment gekühlt, da der austretende Treibstoff oder Oxydator eine Kühlwirkung ausübt.

Beispielsweise kann der Abschnitt des Einspritzkopfes ein Abschnitt einer Einspritzfrontplatte sein. Ferner kann die Öffnung so neben dem Plattensegment angeordnet sein, dass der ausströmende Treibstoff oder Oxydator entlang einer Oberfläche des Plattensegment strömt, wodurch beispielsweise eine Filmkühlung auf dem Plattensegment erzielt wird.

Die oben beschriebenen Ausgestaltungen, Beispiele und Varianten können selbstverständlich kombiniert werden, ohne dass dies explizit beschrieben ist. Jede der beschriebenen Ausgestaltungsvarianten ist somit optional zu jeder Ausgestaltungsvariante oder bereits Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

Bevorzugte Ausführungsformen der Erfindung werden nun anhand der beigefügten schematischen Zeichnungen näher erläutert, wobei
- Figur 1: schematisch eine perspektivische Ansicht eines Einspritzkopfes mit nachgerüsten Leitblechen zeigt;
- Figur 2: schematisch zwei benachbarte Nachrüstbauteile zeigt;
- Figur 3: schematisch den Einbau eines Nachrüstbauteils zeigt;
- Figur 4: schematisch das Befestigen des Nachrüstbauteils in einem Einspritzelement zeigt;
- Figur 5: schematisch einen Endmontagezustand eines Nachrüstbauteils zeigt; und
- Figur 6: schematisch ein Ablaufdiagramm eines Verfahrens zum Nachrüsten von Leitblechen zeigt.

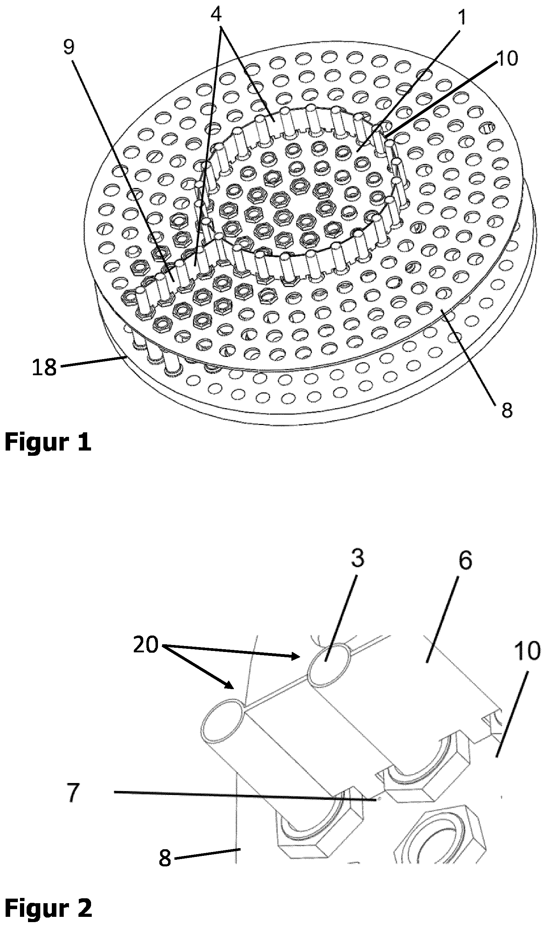

Figur 1 zeigt schematisch eine perspektivische Ansicht eines Einspritzkopfes 1 eines Raketentriebwerks (nicht dargestellt). Der Einspritzkopf 1 weist insbesondere eine Einspritzfrontplatte 8 auf, die üblicherweise eine kopfseitige Begrenzung eines Brennkammerraums bildet. Entlang des Umfangs der Einspritzfrontplatte 8 erstreckt sich für gewöhnlich ein zylindrischer Brennkammerkörper (nicht dargestellt) der den Brennkammerraum außenseitig umgibt. Die ebenfalls in Figur 1 gezeigte Grundplatte 18 ist für gewöhnlich parallel zu der Einspritzfrontplatte 8 angeordnet und bildet mit dieser einen Zwischenraum. In dem Zwischenraum wird Treibstoff oder Oxydator eingeleitet, der über bestimmte Bereiche der Einspritzfrontplatte 8 in den Brennkammerraum geleitet wird.

Die Mehrzahl von Einspritzelementen 2 ist für gewöhnlich sowohl an der Grundplatte 18 als auch an der Einspritzfrontplatte 8 befestigt. In Figur 1 ist die Befestigung an der Einspritzfrontplatte 8 durch Schraubenelemente, wie zum Beispiel Muttern, dargestellt. Figur 1 zeigt nur einen Teil der möglichen Einspritzelemente 2, während in den übrigen Abschnitten des Einspritzkopfes 1 nur die Öffnungen in der Grundplatte 18 als auch der Einspritzfrontplatte 8 zur Aufnahme der Einspritzelemente 2 sichtbar sind.

Ferner sind manche der Einspritzelemente 2 mit einem Nachrüstbauteil 20 versehen (nachgerüstet), welches mit Bezug auf die Figuren 2 bis 5 noch näher erläutert wird. Jedes der Nachrüstbauteile 20 weist eine Verlängerungshülse 3 und ein Plattensegment 6 auf. In Figur 1 sind mehrere solcher Nachrüstbauteile 20 gezeigt, die zusammen ein Leitblech 4 bilden. Im Inneren der Einspritzfrontplatte 8 sind die Nachrüstbauteile 20 so angeordnet, dass ihre Plattensegmente 6 ein ringförmiges Leitblech 10 oder Baffle bilden. Im linken unteren Bereich der Figur 1 sind vier Nachrüstbauteile 20 gezeigt, die zusammen ein radiales Leitblech 9 oder Baffle bilden. Diese Anordnungen ist als lediglich beispielhaft zu verstehen, können auch jeweils einzeln vorgesehen werden, oder es kann eine gänzlich andere Anordnung erfolgen. Jedoch sind insbesondere radiale Leitbleche 9 und ringförmige Leitbleche 10 besonders gut geeignet, um hochfrequente Schwingungen im Brennkammerraum im Bereich des Einspritzkopfes 1 zu verhindern oder zumindest stark zu reduzieren.

Figur 2 zeigt schematisch zwei benachbarte Nachrüstbauteile 20, die in einem äußeren Bereich der Einspritzfrontplatte 8 in zugehörige Einspritzelemente 2 eingebaut sind. Jedes der Nachrüstbauteile 20 umfasst eine Verlängerungshülse 3, die dazu eingerichtet ist, in das Einspritzelement 2 des Einspritzkopfes 1 eingeführt zu werden, sowie mindestens ein Plattensegment 6 das außenseitig an der Verlängerungshülse 3 angebracht ist. Figur 2 zeigt lediglich ein Plattensegment 6, das an der Verlängerungshülse 3 angebracht ist. Selbstverständlich kann beispielsweise an der in Figur 2 gezeigten Verlängerungshülse 3 des linken Nachrüstbauteils 20 ein weiteres Plattensegment 6 angeordnet sein. Dieses Nachrüstbauteil 20 am Rand der Einspritzfrontplatte 8 angeordnet ist, könnten weitere Plattensegmente 6 beispielsweise nach oben und/oder nach unten in Figur 2 angeordnet sein (entsprechend dem Verlauf des Rands der Einspritzfrontplatte 8.

Jedes der Plattensegmente 6 bildet eine Art Fahne an der Verlängerungshülse 3, die lediglich beispielhaft senkrecht zur Einspritzfrontplatte 8 angeordnet sein kann. Um beispielsweise Verwirbelungen oder bestimmte Strömungsrichtungen zu erzielen, kann das Plattensegment 6 mindestens eines Nachrüstbauteils 20 auch schräg zur Einspritzfrontplatte 8 und/oder schräg zur Verlängerungshülse 3 (d. h. schräg zur Längsachse der Verlängerungshülse 3) angeordnet sein.

Ferner kann das Plattensegment 6 des in Figur 2 linken Nachrüstbauteils 20 an der Verlängerungshülse 3 des in Figur 2 rechten Nachrüstbauteils 20 befestigt sein oder mit dieser verbunden sein. Dadurch wird das Plattensegment 6 beidseitig befestigt, wodurch die Stabilität erhöht wird. Ferner ist kein Schlitz oder keine Öffnung zwischen Plattensegment 6 und Verlängerungshülse 3 des benachbarten Nachrüstbauteils 20 vorhanden. Die somit verbundenen Nachrüstbauteile 20 (Verlängerungshülse 3 und Plattensegment 6) bilden ein durchgehendes Leitblech 4.

Alternativ können die Plattensegmente 6 der beiden Nachrüstbauteile 20 auch aufeinander zu ausgerichtet sein, und an deren jeweiligem Ende (jeweiliger Seite) miteinander verbunden werden. Ferner alternativ oder zusätzlich können auch mehrere Plattensegment der 6 an einer Verlängerungshülse 3 angeordnet sein, wodurch sich Leitbleche oder Baffle in mehrere Richtungen ausgehend von der Verlängerungshülse 3 bilden lassen.

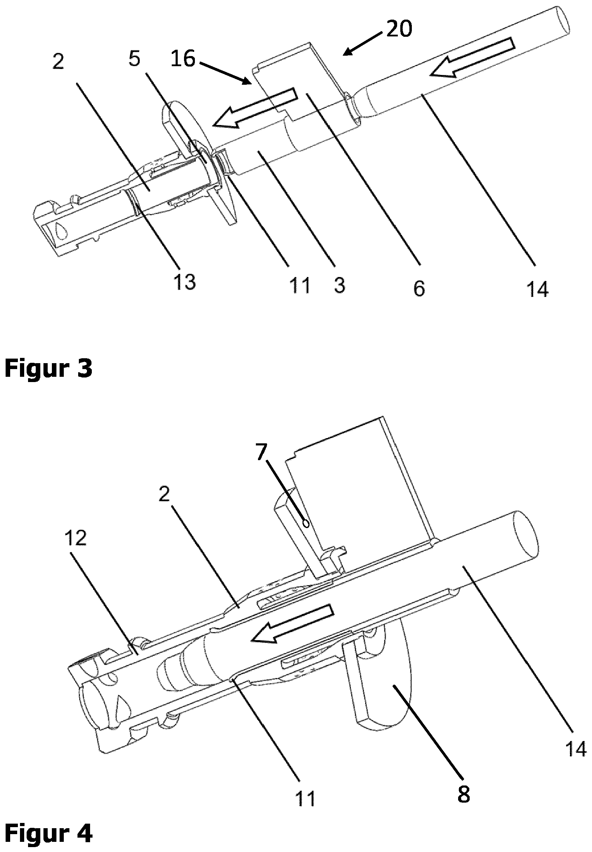

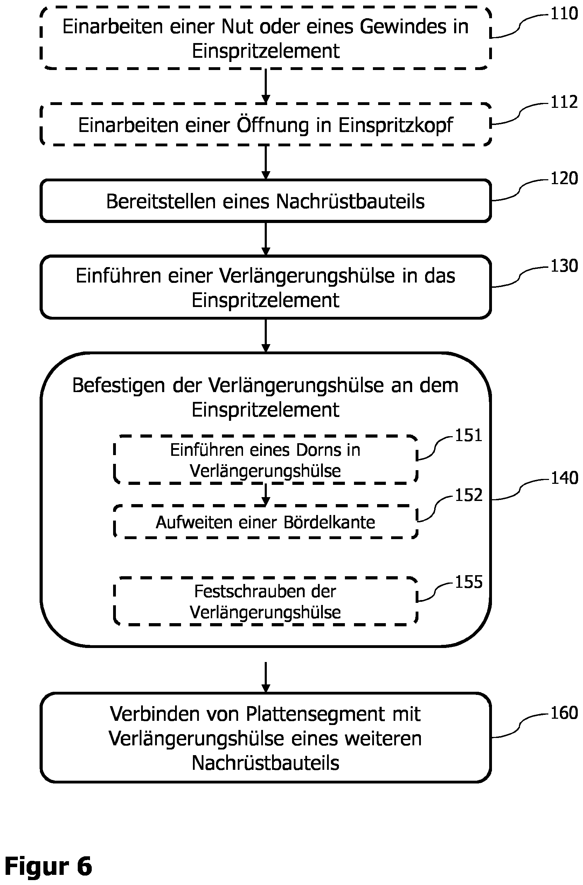

Es wird auch auf Figur 6 verwiesen, welche schematisch ein Ablaufdiagramm eines Verfahrens zum Nachrüsten eines Leitblechs zeigt, das ferner mit Bezug auf die Figuren 3 bis 5 erläutert wird.

Das Verfahren kann einen optionalen Schritt 110 umfassen, in dem eine Nut 13 (Figur 3) auf einer Innenseite eines Einspritzelements 2 eingearbeitet wird. Die Nut 13 kann eine Aufweitung eines Innenraums oder Kanals des Einspritzelements 2 darstellen. Ferner kann die Nut 13 dazu eingerichtet sein, eine Bördelkante 11 (Figur 3) aufzunehmen, wenn diese aufgeweitet wird. Die Nut 13 kann durch Verformung oder Materialabtrag (zum Beispiel Fräsen) hergestellt werden.

Alternativ kann ein Gewinde (nicht dargestellt) auf einer Innenseite des Einspritzelements 2 eingearbeitet werden, das dazu eingerichtet ist, mit einem Gewinde an der Verlängerungshülse 3 zusammen zu wirken. Auch wenn die Figuren 3 bis 5 lediglich die Variante mit Nut 13 und Bördelkante 11 zeigen, ist es jedoch selbstverständlich, dass an der Stelle der Nut 13 bzw. Bördelkante 11 ein jeweiliges Gewinde angeordnet sein kann. Beispielsweise kann in dem Einspritzelement 2 ein Innengewinde eingearbeitet werden, während die Verlängerungshülse 3 ein korrespondierendes Außengewinde umfasst. Das Gewinde an dem Einspritzelement 2 kann bereits bei Herstellung des Einspritzelements 2 eingearbeitet werden oder alternativ nachträglich (bei bereits fertig gestelltem Einspritzkopf) eingearbeitet werden.

Selbstverständlich kann auch in umgekehrter Weise an dem Einspritzelement 2 ein Außengewinde eingearbeitet werden, während die Verlängerungshülse 3 ein korrespondierendes Innengewinde aufweist.

Mit anderen Worten weist die Verlängerungshülse 3 einen Befestigungsabschnitt 11 in Form einer Nut oder eines Gewindes auf, mit dem sich das Nachrüstbauteil an dem Einspritzelement 2 befestigen lässt.

Ein weiterer optionaler Schritt 112 kann ein Einarbeiten mindestens einer Öffnung 7 (Figuren 2, 4, 5) in einem Abschnitt des Einspritzkopfes 1 umfassen, der sich neben einem Plattensegment 6 eines eingebauten Nachrüstbauteils 20 befindet. Der Abschnitt des Einspritzkopfes 1 kann insbesondere ein Abschnitt einer Einspritzfrontplatte 8 sein. Wie insbesondere der Figur 4 entnommen werden kann, ist die Öffnung 7 so neben einem Plattensegment 6 angeordnet, dass Treibstoff oder Oxydator, der sich in einem Zwischenraum zwischen Einspritzfrontplatte 8 und Grundplatte 8 befindet, durch die Öffnung 7 in den Brennkammerraum strömen kann und dabei neben das Plattensegment 6 strömt. Dadurch wird das Plattensegment 6, beispielsweise durch Filmkühlung, gekühlt.

Das Verfahren zum Nachrüsten eines Leitblechs umfasst in einem Schritt 120 ein Bereitstellen mindestens eines Nachrüstbauteils 20. Das Nachrüstbauteil 20 kann wie dargestellt, eine Verlängerungshülse 3 und mindestens ein Plattensegment 6 umfassen.

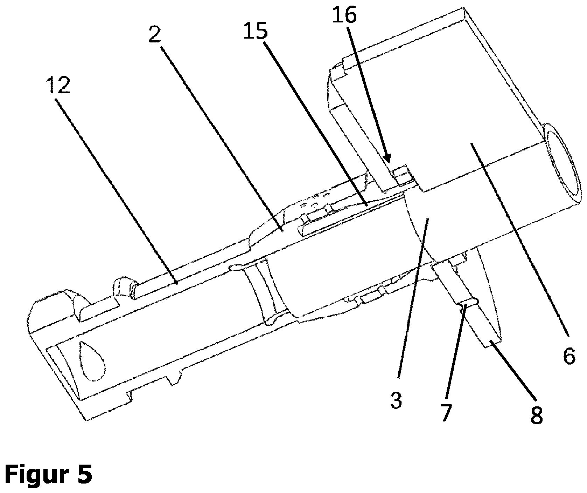

In einem weiteren Schritt 130 wird die Verlängerungshülse 3 des Nachrüstbauteils 20 in ein Einspritzelement 2 des Einspritzkopfes 1 eingeführt, wie dies durch den Pfeil an dem Plattensegment 6 schematisch dargestellt ist. Insbesondere wird der Befestigungsabschnitt 11 der Verlängerungshülse 3 zuerst in den Innenraum oder Kanal des Einspritzelements 2 eingeführt und damit voran in das Innere des Einspritzelements 2 geschoben. Insbesondere in den Figuren 4 und 5 ist der sogenannte Post 12 des Einspritzelements 2 erkennbar, der ein langgestrecktes Element mit innenliegendem Kanal bildet. An seinem dem Brennkammerraum abgewandten Ende befinden sich Öffnungen, durch die Treibstoff oder Oxydator einströmen kann und durch den Post 12 in Richtung Brennkammerraum (in Figur 5 nach rechts oben) strömen kann.

In einem weiteren Schritt 140 wird die Verlängerungshülse 3 an dem Einspritzelement 2 befestigt. Je nach Ausgestaltung kann das Befestigen unterschiedlich ausgeführt werden.

Beispielsweise kann beim Vorliegen einer Bördelkante 11 in einem Schritt 151 ein Dorn 14 in die Verlängerungshülse 3 von einem der Bördelkante 11 der Verlängerungshülse 3 abgewandten Ende eingeführt oder eingeschoben werden. Selbstverständlich kann, wie in Figur 3 dargestellt, der Dorn 14 bereits in der Verlängerungshülse 3 eingeführt sein, bevor der Schritt 130 durchgeführt wird.

In einem nachfolgenden Schritt 152 wird die Bördelkante 11 zur Fixierung des Nachrüstbauteils 20 in dem Einspritzelement 2 aufgeweitet. Insbesondere kann der Dorn 14 in Einführrichtung weitergeführt werden, wie dies durch den Pfeil auf dem Dorn 14 in Figur 4 dargestellt ist. Ein Kopf des Dorns 14 presst dabei die Bördelkante 11 nach außen. Dafür ist der Kopf des Dorns 14 mit einem Durchmesser ausgestattet, der dem Innendurchmesser der Verlängerungshülse 3 entspricht. Die zuvor nach innen gerichtete (gebogene) Bördelkante 11 wird nun nach außen gepresst, wodurch die Verlängerungshülse 3 kraftschlüssig an einer Innenseite des Einspritzelements 2 befestigt wird.

Im Fall der optional vorgesehenen Nut 13 kann die Bördelkante 11 in die Nut 13 gepresst werden. Dadurch kann die Bördelkante 11 auch eine formschlüssige Befestigung der Verlängerungshülse 3 an dem Einspritzelement 2 bewerkstelligen.

Anschließend wird der Dorn 14 aus der Verlängerungshülse 3 herausgezogen, wodurch der in Figur 5 dargestellte Endmontagezustand entsteht. Darin bildet die Verlängerungshülse 3 eine Verlängerung des Innenraums oder Kanals des Einspritzelements 2, durch den (wie zuvor auch) Treibstoff oder Oxydator in den Brennkammerraum strömen kann (nach rechts in Figur 5).

Alternativ kann in einem Schritt 155 die Verlängerungshülse 3 an dem Einspritzelement 2 festgeschraubt werden, wenn beide Bauteile korrespondierende Gewinde aufweisen.

Wie in den Figuren 3 und 5 entnommen werden kann, eignet sich das Nachrüstbauteil 20 auch dazu, einen Einschnitt (Recess) des Einspritzelements 2 zu beseitigen bzw. zu verschließen. Dieser Einschnitt kann eine Änderung des Innendurchmesser des Posts 12 am brennkammerraumseitigen Ende sein. Beispielsweise kann der Einschnitt eine hintere Beschneidung darstellen, die bei koaxialen Einspritzelementen dadurch entsteht, dass das innere Element des Einspritzelements 2 vor der Frontplatte 8 (bei Betrachtung in Richtung Brennkammerraum) endet. Mit anderen Worten ist das innere Element nicht bündig mit einer Oberfläche der Frontplatte, die dem Brennkammerraum zugewandt ist. Dies kann zu einer teilweisen Vorvermischung beider Treibstoffkomponenten führen, da nur noch ein gemeinsamer Strömungskanal in dem Einspritzelement 2 verbleibt. Durch die die Verlängerungshülse 3 wird somit in den entsprechenden Elementen eine Vorvermischung der Komponenten vermieden.

In einem weiteren, optionalen Verfahrensschritt 160 kann das mindestens eine Plattensegment 6 des Nachrüstbauteils 20 mit einer Verlängerungshülse 3 oder einem Plattensegment 6 eines weiteren Nachrüstbauteils 20 verbunden werden. Das weitere Nachrüstbauteil 20 kann in ein benachbartes Einspritzelement 2 eingebracht sein, wie es in den Figuren 1 und 2 dargestellt ist. Dadurch bilden die Nachrüstbauteile 20, sobald sie miteinander verbunden sind, ein durchgängiges Leitblech 4 oder Baffle, welches in einer beliebigen Anordnung auf der Einspritzfrontplatte 8 vorgesehen sein kann. Das Verbinden in Schritt 160 kann beispielsweise durch Schweißen erfolgen.

In Figur 5 ist ferner ein Austrittsbereich 15 erkennbar, durch den koaxial zum Innenraum oder Kanal des Einspritzelements 2 Treibstoff oder Oxydator in den Brennkammerraum strömen kann. Dieser Austrittsbereich 15 (auch als Sleeve-Austritt bezeichnet) kann eine ringförmige Spaltöffnung sein, die entweder durch das Einspritzelement 2 im Bereich der Einspritzfrontplatte 8 gebildet wird oder durch das Einspritzelement 2 und eine Innenseite einer entsprechenden Öffnung in der Einspritzfrontplatte 8 gebildet wird. Der hier austretende Treibstoff oder Oxydator kann weiterhin in den Brennkammerraum strömen und sich hier mit der anderen Komponente (Oxydator oder Treibstoff) vermischen und die notwendige chemische Reaktion ausführen. Dabei kann der durch den Austrittsbereich 15 strömende Treibstoff oder Oxydator die Verlängerungshülse 3 außenseitig kühlen. Ferner kann auch der Bereich des Plattensegments 6, der an der Verlängerungshülse 3 angebracht ist, gekühlt werden.

In den Figuren 2, 3, 4 und 5 ist ferner eine Kontur 16 der in Richtung Befestigungsabschnitt 11 zeigenden Kante des mindestens einen Plattensegments 6 dargestellt, die an eine außenseitige Kontur des Einspritzelements 2 und einen daran angrenzenden Abschnitts des Einspritzkopfes 1 angepasst ist. Die Kontur 16 kann insbesondere einen Verlauf nachbilden, der durch die dem Brennkammerraum zugewandte Oberfläche der Einspritzfrontplatte 8 und/oder des Einspritzelements 2 und/oder einer Befestigungsvorrichtung (zum Beispiel die in Figur 2 erkennbare Mutter) gebildet wird. Somit kann die Kontur 16 dahingehend ausgebildet sein, einen Bereich zwischen den zwei benachbarten Verlängerungshülse 3 vollständig abzuschließen.

Entlang der Kontur 16 kann das Plattensegment 6 optional mit der Einspritzfrontplatte 8 und den weiteren Komponenten verbunden werden, zum Beispiel verschweißt werden.

Die hier beschriebenen Ausführungsformen sind als lediglich beispielhaft zu verstehen. Der Umfang der vorliegenden Offenbarung wird ausschließlich durch die nachfolgenden Ansprüche definiert.

## Patentansprüche

1. Nachrüstbauteil (20) zum Herstellen eines Leitblechs (4) an einem Einspritzkopf (1) eines Raketentriebwerks, wobei das Nachrüstbauteil (20) umfasst:
eine Verlängerungshülse (3), die dazu eingerichtet ist, in ein Einspritzelement (2) des Einspritzkopfes (1) eingeführt zu werden; und
mindestens ein Plattensegment (6), das außenseitig an der Verlängerungshülse (3) angebracht ist,
wobei die Verlängerungshülse (3) an einem dem Plattensegment (6) abgewandten Ende einen Befestigungsabschnitt (11) aufweist, der dazu eingerichtet ist, das Nachrüstbauteil (20) an dem Einspritzelement (2) zu befestigen.

2. Nachrüstbauteil (20) gemäß Anspruch 1, wobei der Befestigungsabschnitt eine Bördelkante (11) oder ein Gewinde umfasst.

3. Nachrüstbauteil (20) gemäß Anspruch 1 oder 2, wobei das mindestens eine Plattensegment (6) an einer in Richtung Befestigungsabschnitt (11) zeigenden Kante eine Kontur (16) aufweist, die an eine außenseitige Kontur des Einspritzelements (2) und einen daran angrenzenden Abschnitts des Einspritzkopfes (1) angepasst ist.

4. Verfahren zum Nachrüsten eines Einspritzkopfes (1) eines Raketentriebwerks mit Leitblechen (4), wobei das Verfahren umfasst:
Bereitstellen (120) mindestens eines Nachrüstbauteils (20) gemäß einem der Ansprüche 1 bis 3;
Einführen (130) der Verlängerungshülse (3) des Nachrüstbauteils (20) in ein Einspritzelement (2) des Einspritzkopfes (1); und
Befestigen (140) des Befestigungsabschnitts der Verlängerungshülse (3) an dem Einspritzelement (2).

5. Verfahren gemäß Anspruch 4, wobei das Befestigen umfasst:
Einführen (151) eines Dorns (14) in die Verlängerungshülse (3) von einem einer Bördelkante (11) der Verlängerungshülse (3) abgewandten Ende, und Aufweiten (152) der Bördelkante (11) zur Fixierung des Nachrüstbauteils (20) in dem Einspritzelement (2); oder
Festschrauben (155) der Verlängerungshülse (3) an dem Einspritzelement (2).

6. Verfahren gemäß Anspruch 5, wobei das Verfahren ferner umfasst:
Einarbeiten (110) einer Nut (13) oder eines Gewindes auf einer Innenseite des Einspritzelements (2), wobei die Nut (13) dazu eingerichtet ist, die aufgeweitete Bördelkante (11) aufzunehmen, und das Gewinde dazu eingerichtet ist, mit einem Gewinde an der Verlängerungshülse (3) zusammen zu wirken,
wobei vorzugsweise die Nut (13) oder das Gewinde innenseitig und in Umfangsrichtung eines Posts (12) des Einspritzelement (2) verläuft.

7. Verfahren gemäß einem der Ansprüche 4 bis 6, wobei das Verfahren ferner umfasst:
Verbinden (160) des mindestens einen Plattensegments (6) mit einer Verlängerungshülse (3) oder einem Plattensegment (6) eines weiteren Nachrüstbauteils (20), das in ein benachbartes Einspritzelement (2) eingebracht ist,
wobei vorzugsweise das Verbinden (160) durch Schweißen erfolgt.

8. Verfahren gemäß Anspruch 7, wobei das Einführen (130) und das Verbinden (160) ein Herstellen eines radial angeordnet Leitblechs (4) und/oder eines ringförmigen Leitblechs (10) umfasst.

9. Verfahren gemäß einem der Ansprüche 4 bis 8, wobei das Verfahren ferner umfasst:
Einarbeiten (112) mindestens einer Öffnung (7) in einem Abschnitt des Einspritzkopfes (1), der sich neben dem Plattensegment (6) des eingebauten Nachrüstbauteils (20) befindet,
wobei vorzugsweise der Abschnitt des Einspritzkopfes (1) ein Abschnitt einer Einspritzfrontplatte (8) ist.
